# EUROPÄISCHE PATENTSCHRIFT

(11) **EP 3 819 622 B1**
(45) Veröffentlichungstag und Bekanntmachung des Hinweises auf die Patenterteilung: **22.03.2023**
(21) Anmeldenummer: 20201371.0
(22) Anmeldetag: 12.10.2020
(51) Int. Cl.: G01M 17/02

(54) **REIFENPRÜFEINRICHTUNG**
TYRE TESTING DEVICE
DISPOSITIF DE CONTRÔLE DE PNEUS

(30) Priorität: 07.11.2019 DE 102019217183
(43) Veröffentlichungstag der Anmeldung: 12.05.2021
(73) Patentinhaber: Continental Reifen Deutschland GmbH, 30165 Hannover (DE)
(72) Erfinder: Frerichs, Gesa, 30419 Hannover (DE); Kirschning, Oliver, 30419 Hannover (DE); Moreira, Eduardo João, 30419 Hannover (DE); Silva, Ana Eduarda, Dr., 30419 Hannover (DE)
(74) Vertreter: Continental Corporation

(56) Entgegenhaltungen:
- DE-A1- 2 852 188
- US-A1- 2008 066 532
- US-A1- 2013 128 029

## Beschreibung

Die Erfindung betrifft eine Reifenprüfeinrichtung mit einer Rotationseinrichtung, welche mehrere Kontaktglieder zum Einspannen eines zu prüfenden Reifens aufweist, wobei die Kontaktglieder an der Kontur der umlaufenden Reifenwülste des zu prüfenden Reifens positionierbar sind und zumindest ein Kontaktglied rotierend antreibbar und dazu eingerichtet ist, den zu prüfenden Reifen zu rotieren.

Ferner betrifft die Erfindung ein Verfahren zum Prüfen eines Reifens mittels einer Reifenprüfeinrichtung mit den Schritten: Einspannen des zu prüfenden Reifens in eine Rotationseinrichtung der Reifenprüfeinrichtung durch Positionieren mehrerer Kontaktglieder der Rotationseinrichtung an der Kontur der umlaufenden Reifenwülste des zu prüfenden Reifens und Rotieren des zu prüfenden Reifens durch rotierendes Antreiben zumindest eines Kontaktglieds.

Reifen sind nach Beendigung des Herstellungsprozesses regelmäßig auf Defekte, Fehler und Beschädigungen zu überprüfen. Eine derartige Überprüfung erfolgt selbst in der Serienproduktion häufig manuell durch einen entsprechend geschulten Reifenprüfer, welcher eine optische Sichtprüfung der Reifenoberfläche vornimmt.

Aufgrund der Tatsache, dass Reifen üblicherweise schwarze, runde und verformbare Körper darstellen, ist die manuelle optische Prüfung des Reifens zeitaufwendig und fehleranfällig. Eine derartige Reifenprüfung unterliegt außerdem der subjektiven Bewertung des Reifenprüfers und eignet sich somit nur bedingt zur Einhaltung von Prüfungsstandards und Qualitätskriterien.

Die Reifenprüfung stellt außerdem eine monotone und ermüdende Tätigkeit dar, sodass ein hohes Risiko einer inkonsistenten Reifenprüfung besteht. Da Reifen sicherheitsrelevante Teile darstellen, verbietet sich außerdem eine stichprobenartige Prüfung von Reifen. Vielmehr sind sämtliche Reifen vor dem Inverkehrbringen auf Defekte, Fehler und Beschädigungen zu prüfen.

Erste Ansätze zur Automatisierung der Reifenprüfung sind beispielsweise aus den Druckschriften US 2010/0002244 A1, US 2018/0266810 A1, US 2018/0299353 A1, WO 2017/115290 A1 und WO 2018/015908 A1 bekannt.

Die US 2008066532A1 betrifft das Gebiet der zerstörungsfreien Prüfung (NDT). Insbesondere bezieht sich diese auf ein Testen von Reifen unter Verwendung eines automatischen Reifenwulstverteilers.

Die US 2013128029A1 offenbart ferner eine Vorrichtung auf dem Gebiet der Reifenherstellung und insbesondere auf dem Gebiet der visuellen Kontrolle der Reifen während oder am Ende des Herstellungsprozesses. Diese Vorrichtung zeichnet sich dadurch aus, dass sie auch Mittel zum Öffnen und Halten des zweiten Wulstes umfasst, wobei die Mittel zwei innere Halterollen umfassen, die in Bezug zueinander in Umfangsrichtung benachbart angeordnet sind.

Die DE 2852188A1 beschreibt eine Prüfmaschine für Kraftfahrzeugreifen und eine Vorrichtung für eine holographische Prüfmaschine für Kraftfahrzeugreifen, die durch Spreizung ihrer Wülste für die holographische Aufnahme vorbereitet werden.

Diese und andere bekannte Reifenprüfsysteme bedingen eine aufwendige und kostenintensive Reifenprüfvorrichtung und/oder erfordern eine vergleichsweise zeitintensive Reifenprüfung. Entsprechende Reifenprüfsysteme eignen sich häufig lediglich zur Prüfung von Reifenteilbereichen oder erlauben lediglich die Prüfung auf spezielle Defekttypen, sodass ergänzende, meist manuelle, Prüfungen erforderlich sind.

Die der Erfindung zugrundeliegende Aufgabe besteht somit darin, die automatische Reifenprüfung hinsichtlich Prüfungsqualität, Prüfungskosten und/oder Prüfungsdauer zu verbessern.

Die Aufgabe wird gelöst durch eine Reifenprüfeinrichtung der eingangs genannten Art, wobei die erfindungsgemäße Reifenprüfeinrichtung eine oder mehrere sensorische Aufnahmeeinrichtungen umfasst, welche dazu eingerichtet sind, Aufnahmen von einer innenliegenden und/oder einer außenliegenden Reifenoberfläche zu erzeugen.

Die Erfindung macht sich die Erkenntnis zunutze, dass durch die Kombination von einer oder mehreren sensorischen Aufnahmeeinrichtungen und einer den zu prüfenden Reifen in Rotation versetzenden Rotationseinrichtung Aufnahmen der zu prüfenden Reifenoberfläche mit einem geringen Zeitaufwand erzeugt werden können. Beispielsweise ist die eine oder sind die mehreren Aufnahmeeinrichtungen derart ausgebildet und angeordnet, dass diese die gesamte innenliegende und/oder außenliegende Reifenoberfläche während einer Umdrehung des Reifens aufnehmen können, wodurch eine Gesamtprüfung des Reifens ermöglicht wird.

Die Reifenprüfeinrichtung weist vorzugsweise eine Auswerteeinrichtung, insbesondere einen Auswertecomputer, auf, welche dazu eingerichtet ist, die Aufnahmen der einen oder der mehreren sensorischen Aufnahmeeinrichtungen zur Erfassung von Reifenfehlern, -beschädigungen und/oder -defekten auszuwerten. Mittels der Reifenprüfeinrichtung kann somit eine automatisierte Reifenprüfung umgesetzt werden, welche vergleichsweise schnell durchführbar ist. Dies führt zu kurzen Prüfzyklen und somit zu einer gesteigerten Wirtschaftlichkeit des Prüfverfahrens.

Die eine oder die mehreren sensorischen Aufnahmeeinrichtungen arbeiten vorzugsweise berührungslos. Die Kontaktglieder stehen während des Prüfvorgangs in Kontakt mit den Reifenwülsten des zu prüfenden Reifens. Das Einspannen des zu prüfenden Reifens ist erforderlich, damit eine stabile und ruhige Reifenrotation umgesetzt werden kann, welche zur Erzeugung geeigneter Aufnahmen notwendig ist. Reifenvibrationen werden durch das Einspannen des zu prüfenden Reifens im Wesentlichen vermieden. Der zu prüfende Reifen ist vorzugsweise ein Fahrzeugluftreifen.

Die Kontaktglieder der Rotationseinrichtung können positionierbare Streben oder Wellen sein. Vorzugsweise sind mehrere oder sämtliche Kontaktglieder rotierend antreibbar. Vorzugsweise umfasst die Reifenprüfeinrichtung eine Antriebseinheit zum Antreiben eines, mehrerer oder sämtlicher Kontaktglieder der Rotationseinrichtung. Die Rotationseinrichtung weist vorzugsweise vier Kontaktglieder auf. Die Kontaktglieder berühren die Kontur die Reifenwülste des zu prüfenden Reifens vorzugsweise an äquidistant von einem Mittelpunkt beabstandeten Kontaktpunkten. Vorzugsweise berühren die Kontaktglieder die Reifenwülste an ihren umlaufenden Innenkonturen. Die Kontaktglieder sind bewegbar, insbesondere verschwenkbar, ausgebildet, damit ein Einspannen und Rotieren von Reifen unterschiedlicher Größe umsetzbar ist. Somit können in der erfindungsgemäßen Reifenprüfeinrichtung beispielsweise sowohl 14 Zoll Reifen als auch 20 Zoll Reifen geprüft werden. Insbesondere bilden die Kontaktpunkte der Kontaktglieder an den Reifenwülsten ein Rechteck, insbesondere ein Quadrat aus. Jedes Kontaktglied erstreckt sich vorzugsweise in Querrichtung durch die Felgenausnehmung des zu prüfenden Reifens und berührt somit beide Reifenwülste des zu prüfenden Reifens.

Die erfindungsgemäße Reifenprüfeinrichtung weist zumindest ein Kontaktglied einen Spreizmechanismus auf, mittels welchem die Reifenwülste des zu prüfenden Reifens auseinander spreizbar sind. Zum Erzeugen von geeigneten Aufnahmen der innenliegenden Oberfläche des zu prüfenden Reifens ist ein Auseinanderspreizen der Reifenwülste erforderlich, um eine Sichtbehinderung für die eine oder die mehreren auf den Innenbereich des zu prüfenden Reifens ausgerichteten Aufnahmeeinrichtungen zu verhindern. Wenn die erfindungsgemäße Reifenprüfeinrichtung eine Beleuchtungseinrichtung mit einer oder mehreren Lichtquellen umfasst, kann durch das Auseinanderspreizen der Reifenwülste des zu prüfenden Reifens auch die Gleichmäßigkeit der Lichtverteilung verbessert werden. Die Qualität der Aufnahmen der einen oder der mehreren Aufnahmeeinrichtungen wird somit weiter verbessert. Das Auseinanderspreizen der Reifenwülste erweitert auch die Positionierbarkeit der auf den Innenbereich des zu prüfenden Reifens ausgerichteten Aufnahmeeinrichtungen. Die eine oder die mehreren Aufnahmeeinrichtungen können somit in einem geeigneten Winkel zu den innenliegenden Oberflächen des zu prüfenden Reifens angestellt bzw. ausgerichtet werden.

In einer weiteren bevorzugten Ausführungsform der erfindungsgemäßen Reifenprüfeinrichtung umfasst der Spreizmechanismus eine Teleskopmechanik. Vorzugsweise sind die Kontaktglieder der Rotationseinrichtung mehrteilig ausgebildet, wobei zumindest zwei Teile teleskopartig ineinander und auseinander schiebbar sind. Beispielsweise umfassen die Kontaktglieder jeweils eine Hohlwelle und eine in die Hohlwelle hineinschiebbar und aus der Hohlwelle herausschiebbare Innenwelle. Über die Teleskopmechanik lässt sich die Spreizung der Reifenwülste des zu prüfenden Reifens konstruktiv einfach und kostengünstig umsetzen, wobei eine entsprechende Lösung ebenfalls langlebig und robust gegen äußere Beanspruchung ist.

In einer anderen bevorzugten Ausführungsform der erfindungsgemäßen Reifenprüfeinrichtung umfasst der Spreizmechanismus zwei Spreizkörper, deren Abstand in Querrichtung des Reifens zum Auseinanderspreizen der Reifenwülste des zu prüfenden Reifens veränderbar ist. Der Abstand der Spreizkörper ist vorzugsweise über die Teleskopmechanik des Spreizmechanismus veränderbar. Die Spreizkörper können als Spreizscheiben ausgebildet sein, welche eine Umfangsvergrößerung an den Kontaktgliedern bedingen. Zum Auseinanderspreizen der Reifenwülste sind die Spreizkörper mit den Reifenwülsten in Eingriff zu bringen, sodass durch eine Abstandsvergrößerung der Spreizkörper die Reifenwulstspreizung umgesetzt wird.

In einer weiteren bevorzugten Ausführungsform der erfindungsgemäßen Reifenprüfeinrichtung ist eine, sind mehrere oder sämtliche sensorische Aufnahmeeinrichtungen als Kameras ausgebildet. Die Kameras sind vorzugsweise dazu eingerichtet, Bildaufnahmen von der innenliegenden und/oder der außenliegenden Reifenoberfläche des zu prüfenden Reifens zu erzeugen. Es kann somit eine zweidimensionale Bildaufnahme der innenliegenden Reifenoberfläche und/oder eine zweidimensionale Bildaufnahme der außenliegenden Reifenoberfläche über die eine oder die mehreren Aufnahmeeinrichtungen erzeugt werden. Die sensorischen Aufnahmeeinrichtungen sind vorzugsweise mittels steuerbaren Positionierantrieben positionierbar. Die Positionierung erfolgt vorzugsweise derart, dass sich die Reifenoberfläche im Fokusbereich der jeweiligen Aufnahmeeinrichtungen befindet. Die Positionierantriebe können beispielsweise Linearantriebe sein. Die Positionierantriebe können elektrische, pneumatische oder hydraulische Antriebe sein. Alternativ können die sensorischen Aufnahmeeinrichtungen auch 3D-Scan-Sensoren, Profilsensoren oder Lichtschnittsensoren sein.

Vorzugsweise sind über die Positionierantriebe auch Lichtquellen einer Beleuchtungseinrichtung der Reifenprüfeinrichtung positionierbar.

Die erfindungsgemäße Reifenprüfeinrichtung wird ferner dadurch vorteilhaft weitergebildet, dass eine oder mehrere sensorische Aufnahmeeinrichtungen zumindest teilweise in der Felgenausnehmung des Reifens positionierbar und auf einen innenliegenden Oberflächenbereich des Reifens ausrichtbar sind. Die Positionierung einer Aufnahmeeinrichtung kann das axiale Verfahren der Aufnahmeeinrichtung in Querrichtung und/oder das radiale Verfahren der Aufnahmeeinrichtung umfassen. Das axiale Verfahren der Aufnahmeeinrichtung in Querrichtung erfolgt beispielsweise zum Hereinfahren oder zum Herausfahren der Aufnahmeeinrichtung in die Felgenausnehmung des zu prüfenden Reifens. Das radiale Verfahren der Aufnahmeeinrichtung erfolgt zum Anpassen der Position der Aufnahmeeinrichtung an die Reifengröße des zu prüfenden Reifens. Die Verfahrbarkeit in die Felgenausnehmung hinein und aus der Felgenausnehmung heraus ist für die Umsetzung einer automatisierten Prüfroutine besonders wichtig, damit der Reifen automatisiert in die Reifenprüfeinrichtung eingesetzt und aus der Reifenprüfeinrichtung entnommen werden kann.

Darüber hinaus ist eine erfindungsgemäße Reifenprüfeinrichtung vorteilhaft, bei welcher zwei sensorische Aufnahmeeinrichtungen derart auf innenliegende Oberflächenbereiche des Reifens ausrichtbar sind, dass sich der Aufnahmebereich der zwei sensorischen Aufnahmeeinrichtungen überschneidet. Vorzugsweise überschneidet sich der Aufnahmebereich der zwei sensorischen Aufnahmeeinrichtungen derart, dass sich ein umlaufender Überlappungsbereich in der aufgenommenen Gesamtabbildung der innenliegenden Reifenoberfläche ergibt. Die zwei sensorischen Aufnahmeeinrichtungen sind vorzugsweise gegenüberliegend angeordnet und können spiegelsymmetrisch zueinander ausgerichtet sein. eine sensorische Aufnahmeeinrichtung erzeugt vorzugsweise eine Aufnahme vom linken Innenbereich des Reifens, also dem linken Innenwulstbereich, dem Innenbereich der linken Flanke und einem linken Abschnitt des umlaufenden Mittelbereichs. Eine sensorische Aufnahmeeinrichtung erzeugt vorzugsweise eine Aufnahme vom rechten Innenbereich des zu prüfenden Reifens, also dem rechten Innenwulstbereich, dem Innenbereich der rechten Flanke und einem rechten Abschnitt des umlaufenden Mittelbereichs. Der Überlappungsbereich ist vorzugsweise ein umlaufender Streifen im umlaufenden Mittelbereich des zu prüfenden Reifens. Die Ausrichtung der zwei sensorischen Aufnahmeeinrichtungen erlaubt die präzise Erfassung des konkaven Innenbereichs des zu prüfenden Reifens. Vorzugsweise weist die Reifenprüfeinrichtung Lichtquellen an den zwei sensorischen Aufnahmeeinrichtungen auf, welche dazu eingerichtet sind, den Aufnahmebereich der zwei Aufnahmeeinrichtungen auszuleuchten.

Die erfindungsgemäße Reifenprüfeinrichtung wird durch eine Beleuchtungseinrichtung mit einer oder mehreren Lichtquellen vorteilhaft weitergebildet, wobei die eine oder die mehreren Lichtquellen dazu eingerichtet sind, die innenliegende und/oder die außenliegende Reifenoberfläche zu beleuchten. Die Lichtquellen der Beleuchtungseinrichtung sind vorzugsweise als LEDs ausgebildet. Vorzugsweise sind die Lichtquellen im Nahbereich der sensorischen Aufnahmeeinrichtungen angeordnet. Wenn die sensorischen Aufnahmeeinrichtungen Linsen aufweisen, sind die Lichtquellen vorzugsweise um die Linsen der Aufnahmeeinrichtungen herum angeordnet. Vorzugsweise weist die Beleuchtungseinrichtung eine oder mehrere Lichtquellen auf, welche auf die außenliegende Oberfläche des zu prüfenden Reifens ausrichtbar sind. Ferner weist die Beleuchtungseinrichtung vorzugsweise eine oder mehrere Lichtquellen auf, welche auf die innenliegende Oberfläche des zu prüfenden Reifens ausrichtbar sind. Vorzugsweise sind zumindest eine Lichtquelle und zumindest eine sensorische Aufnahmeeinrichtung Bestandteil einer gemeinsamen Prüfeinheit, welche über einen Positionierantrieb positionierbar ist. Die Positionierung der Lichtquellen erfolgt vorzugsweise derart, dass eine gleichmäßige Ausleuchtung der innenliegenden und/oder außenliegenden Reifenoberfläche im Aufnahmebereich der Aufnahmeeinrichtungen erfolgt.

Die der Erfindung zugrundeliegende Aufgabe wird ferner durch ein Verfahren des eingangs genannten Art gelöst, wobei im Rahmen des erfindungsgemäßen Verfahrens Aufnahmen von einer innenliegenden und/oder außenliegenden Reifenoberfläche mittels einer oder mehrerer sensorischer Aufnahmeeinrichtungen der Reifenprüfeinrichtung erzeugt werden. Vorzugsweise erfolgt die Aufnahme der gesamten innenliegenden und/oder außenliegenden Reifenoberfläche während einer Umdrehung des zu prüfenden Reifens durch die eine oder die mehreren Aufnahmeeinrichtungen. Das Auswerten der Aufnahmen der einen oder der mehreren sensorischen Aufnahmeeinrichtungen erfolgt vorzugsweise mittels einer Auswerteeinrichtung, insbesondere eines Auswertecomputers, der Reifenprüfeinrichtung. Das Auswerten der Aufnahmen erfolgt zur Erfassung von Reifenfehlern, -beschädigungen und/oder -defekten.

Das erfindungsgemäße Verfahren wird vorzugsweise mittels einer Reifenprüfeinrichtung nach einer der vorstehend beschriebenen Ausführungsformen ausgeführt. Hinsichtlich der Vorteile und Modifikationen des Verfahrens wird somit auch auf die Vorteile und Modifikationen der erfindungsgemäßen Reifenprüfeinrichtung verwiesen.

In einer bevorzugten Ausführungsform des erfindungsgemäßen Verfahrens werden die Reifenwülste des zu prüfenden Reifens mittels eines Spreizmechanismus zumindest eines Kontaktglieds auseinandergespreizt. Alternativ oder zusätzlich erfolgt das Positionieren einer oder mehrerer sensorischer Aufnahmeeinrichtungen zumindest teilweise in der Felgenausnehmung des zu prüfenden Reifens. Insbesondere werden mehrere sensorische Aufnahmeeinrichtungen auf einen innenliegenden Oberflächenbereich ausgerichtet. Das Ausrichten erfolgt dabei vorzugsweise derart, dass sich der Aufnahmebereich von zwei sensorischen Aufnahmeeinrichtungen überschneidet. Besonders bevorzugt ist ein Verfahren, bei welchem die innenliegende und/oder die außenliegende Reifenoberfläche mittels einer oder mehrerer Lichtquellen einer Beleuchtungseinrichtung der Reifenprüfeinrichtung beleuchtet wird.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Reifenprüfeinrichtung in einer Seitenansicht;
- Fig. 2: ein weiteres Ausführungsbeispiel der erfindungsgemäßen Reifenprüfeinrichtung in einer schematischen Darstellung;
- Fig. 3: ein Ausführungsbeispiel der erfindungsgemäßen Reifenprüfeinrichtung mit einem ungespreizten Reifen;
- Fig. 4: die in der Fig. 3 dargestellte Reifenprüfeinrichtung mit einem auseinandergespreizten Reifen;
- Fig. 5: ein weiteres Ausführungsbeispiel der erfindungsgemäßen Reifenprüfeinrichtung in einer schematischen Darstellung;
- Fig. 6: ein weiteres Ausführungsbeispiel der erfindungsgemäßen Reifenprüfeinrichtung in einer schematischen Darstellung; und
- Fig. 7: die in der Fig. 7 abgebildete Reifenprüfeinrichtung in einer schematischen Schnittdarstellung.

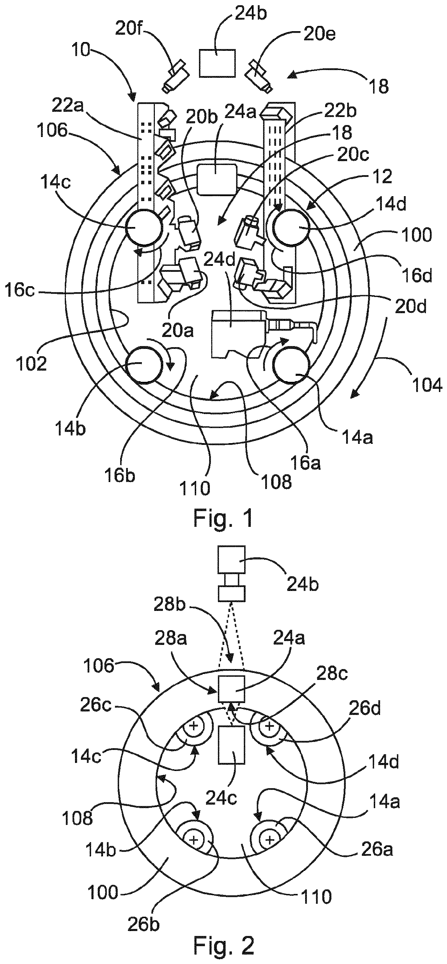

Die Fig. 1 zeigt eine Reifenprüfeinrichtung 10, mittels welcher ein Reifen 100 auf Defekte, Fehler und Beschädigungen geprüft werden kann.

Die Reifenprüfeinrichtung 10 weist eine Rotationseinrichtung 12 auf, welche insgesamt vier Kontaktglieder 14a-14d zum Einspannen des Reifens 100 aufweist. Die Kontaktglieder 14a-14d sind äquidistant von der Rotationsachse des Reifens 100 beabstandet.

Die Kontaktglieder 14a-14d sind an der Innenkontur der umlaufenden Reifenwülste 102 des zu prüfenden Reifens 100 positioniert. Die Kontaktpunkte zwischen den Kontaktgliedern 14a-14d und den umlaufenden Reifenwülsten 102 bilden ein Quadrat.

Die Kontaktglieder 14a-14d sind bewegbar, nämlich verschwenkbar, ausgebildet, sodass auch andere Abstände zur Rotationsachse des Reifens 100 einstellbar sind. Somit können auch Reifen in die Prüfeinrichtung 10 eingespannt werden, deren Reifenwülste 102 einen kleineren oder einen größeren Durchmesser als die Reifenwülste 102 des dargestellten Reifens 100 aufweisen.

Die Kontaktglieder 14a-14d sind mit einer nicht dargestellten Antriebseinheit der Reifenprüfeinrichtung 10 verbunden, über welche die Kontaktglieder 14a-14d rotatorisch antreibbar sind. Durch die Antriebseinheit können die Kontaktglieder 14a-14d im Uhrzeigersinn und gegen den Uhrzeigersinn rotiert werden. Beispielhaft sind die Rotationsrichtungen 16a-16d dargestellt. Durch die Rotation der Kontaktglieder 14a-14d kommt es zur Umsetzung einer Drehbewegung des Reifens 100. Die Drehrichtung des Reifens 100 ist abhängig von der Rotationsrichtung der Kontaktglieder 14a-14d, wobei beispielhaft die Rotationsrichtung 104 dargestellt ist.

Dadurch, dass der Reifen 100 mit den Kontaktgliedern 14a-14d verspannt ist, kann eine stabile und ruhige Reifenrotation umgesetzt werden. Reifenvibrationen werden auf diese Weise im Wesentlichen vermieden.

Die Reifenprüfeinrichtung 10 umfasst mehrere sensorische Aufnahmeeinrichtungen 24a, 24b, 24d, welche dazu eingerichtet sind, Aufnahmen von der innenliegenden und außenliegenden Reifenoberfläche 106, 108 zu erzeugen. Die sensorischen Aufnahmeeinrichtungen 24a, 24b sind als Kameras ausgebildet und dazu eingerichtet, Bildaufnahmen von der außenliegenden Reifenoberfläche 106 zu erzeugen. Die auf beiden Seiten des Reifens 10 angeordneten sensorischen Aufnahmeeinrichtung 24a erzeugen Bildaufnahmen von den Außenflächen der Reifenflanken des Reifens 100. Die sensorische Aufnahmeeinrichtungen 24b erzeugt Bildaufnahmen von der außenliegenden umlaufenden Aufstandsfläche des Reifens 100. Die Reifenprüfeinrichtung 10 kann weitere als Kameras ausgebildete sensorische Aufnahmeeinrichtungen aufweisen, welche Bildaufnahmen von der innenliegenden Reifenoberfläche 108 erzeugen. Die sensorische Aufnahmeeinrichtung 24d ist als Profilsensor oder Lichtschnittsensor ausgebildet und dazu eingerichtet, Aufnahmen von der innenliegenden Reifenoberfläche 108 zu erzeugen.

Die Aufnahmen der innenliegenden und der außenliegenden Reifenoberfläche 106, 108 werden erzeugt, währenddessen der Reifen 100 mittels der Rotationseinrichtung 12 gedreht wird. Die Aufnahmeeinrichtungen 24a, 24b, 24d sind derart angeordnet und ausgerichtet, dass bei einer Umdrehung des Reifens 100 Aufnahmen der gesamten Oberfläche des Reifens 100 erzeugt werden.

Die Reifenprüfeinrichtung 10 weist ferner eine Beleuchtungseinrichtung 18 auf, wobei die Beleuchtungseinrichtung 18 mehrere Lichtquellen 20a-20f aufweist. Die Lichtquellen 20a-20f sind dazu eingerichtet, die innenliegende und die außenliegende Reifenoberfläche 106, 108 zu beleuchten. Die Lichtquellen 20a-20d sind an Trägereinrichtungen 22a, 22b befestigt. Die Beleuchtung erfolgt dabei derart, dass die Aufnahmebereiche der Aufnahmeeinrichtungen 24a, 24b, 24d gleichmäßig ausgeleuchtet werden. Die Lichtquellen 20a-20f sind als LEDs ausgebildet und im Nahbereich der sensorischen Aufnahmeeinrichtungen 24a, 24b, 24d angeordnet. Die Lichtquellen 20a-20f können gemeinsam mit den sensorischen Aufnahmeeinrichtungen 24a, 24b, 24d über nicht dargestellte Positionierantriebe verfahren werden, sodass die Position und Ausrichtung der Aufnahmeeinrichtungen 24a, 24b, 24d und der Lichtquellen 20a-20f an die Reifengröße und die Reifengeometrie des zu prüfenden Reifens 100 angepasst werden kann.

Die Reifenprüfeinrichtung 10 kann ferner eine Auswerteeinrichtung, beispielsweise einen Auswertecomputer, umfassen, welcher dazu eingerichtet ist, die Aufnahmen der sensorischen Aufnahmeeinrichtungen 24a, 24b, 24d zur Identifikation von Reifenfehlern, -beschädigungen und/oder -defekten auszuwerten. Vorzugsweise sind die Aufnahmeeinrichtungen 24a, 24b, 24d signalleitend mit der Auswerteeinrichtung verbunden.

Die Fig. 2 zeigt, dass die sich durch die Felgenausnehmung 110 erstreckenden Kontaktglieder 14a-14d der Rotationseinrichtung 12 jeweils einen Spreizmechanismus aufweisen, wobei der Spreizmechanismus eines Kontaktglieds 14a-14d zwei Spreizkörper 26a-26d umfasst, deren Abstand in Querrichtung des Reifens zum Auseinanderspreizen der Reifenwülste 102 des zu prüfenden Reifens 100 veränderbar ist.

Ferner sind die Aufnahmebereiche 28a-28c der als Kameras ausgebildeten Aufnahmeeinrichtungen 24a-24c dargestellt. Die Reifenprüfeinrichtung 10 weist zwei auf gegenüberliegenden Seiten des Reifens 100 angeordnete Aufnahmeeinrichtungen 24a auf, durch deren Aufnahmebereich 28a die äußere Reifenflanke des Reifens 100 verläuft. Somit lassen sich mittels der Aufnahmeeinrichtungen 24a Bildaufnahmen der äußeren Reifenflanke erzeugen. Die Aufnahmeeinrichtung 24b ist oberhalb des Reifens 100 positioniert und in Richtung der umlaufenden Aufstandsfläche des Reifens 100 ausgerichtet. Die umlaufende Aufstandsfläche des Reifens 100 verläuft durch den Aufnahmebereich 28b der Aufnahmeeinrichtung 24b, sodass mittels der Aufnahmeeinrichtung 24b Bildaufnahmen der umlaufenden Aufstandsfläche des Reifens 100 erzeugt werden können. Ferner weist die Reifenprüfeinrichtung 10 zwei Aufnahmeeinrichtungen 24c auf, wovon die hintere Aufnahmeeinrichtung verdeckt ist. Die Aufnahmeeinrichtungen 24c sind auf den Innenbereich des Reifens 100 ausgerichtet und dienen zum Erzeugen von Bildaufnahmen von der innenliegenden Reifenoberfläche 108. Die Aufnahmebereiche 28c der Aufnahmeeinrichtungen 24c umfassen die inneren Seitenflanken sowie den umlaufenden Mittelbereich des Reifens 100.

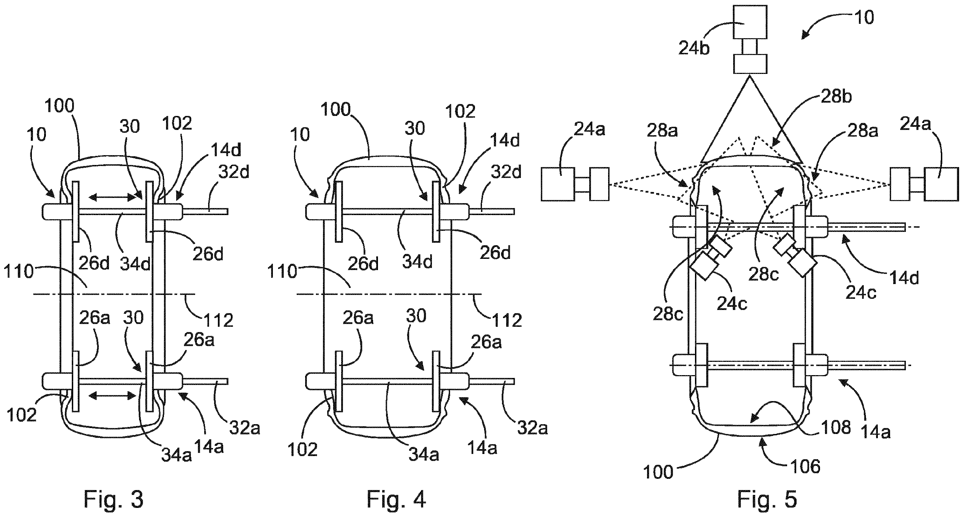

In der Fig. 3 und 4 sind Kontaktglieder 14a, 14d einer Rotationseinrichtung 12 in einem ungespreizten Zustand (Fig. 3) und in einem auseinandergespreizten Zustand (Fig. 4) dargestellt.

Die Kontaktglieder 14a, 14d (sowie die nicht dargestellten Kontaktglieder 14b, 14c) weisen jeweils einen Spreizmechanismus auf, mittels welchem die Reifenwülste 102 des zu prüfenden Reifens 100 auseinanderspreizbar sind. Hierzu weist der Spreizmechanismus eine Teleskopmechanik 30 auf. Mittels der Teleskopmechanik 30 kann der Abstand zwischen den Spreizkörpern 26a, 26d zum Auseinanderspreizen der Reifenwülste 102 des Reifens 100 verändert werden. Die Spreizkörper 26a, 26d sind als Spreizscheiben ausgebildet und innerhalb der Felgenausnehmung 110 des Reifens 100 angeordnet. Die Teleskopmechanik 30 wird über eine Hohlwelle 32a, 32d und eine innerhalb der Hohlwelle verschiebbare Innenwelle 34a, 34d umgesetzt. Der Spreizmechanismus der Kontaktglieder 14a-14d ist mit einem steuerbaren Antrieb verbunden, sodass die Reifenspreizung im Rahmen der Reifenprüfung automatisiert erfolgen kann.

Wenn die Kontaktglieder 14a-14d der Rotationseinrichtung 12 rotatorisch angetrieben werden, wird eine Drehbewegung des Reifens 100 um die Rotationsachse 112 umgesetzt.

Die Fig. 5 zeigt eine Reifenprüfeinrichtung 10 mit fünf Aufnahmeeinrichtungen 24a-24c, welche jeweils als Kamera ausgebildet sind.

Die Aufnahmeeinrichtungen 24a, 24b sind dazu eingerichtet, Bildaufnahmen von der außenliegenden Reifenoberfläche 106 zu erzeugen. Die gegenüberliegenden und spiegelsymmetrisch angeordneten Aufnahmeeinrichtungen 24c sind dazu eingerichtet, Bildaufnahmen von der innenliegenden Reifenoberfläche 108 zu erzeugen. Die Aufnahmeeinrichtungen 24c sind teilweise in der Felgenausnehmung 110 des Reifens 100 positioniert und auf einen innenliegenden Oberflächenbereich des Reifens 100 ausgerichtet.

Die Aufnahmeeinrichtungen 24a-24c können mittels steuerbaren Positionierantrieben positioniert werden, damit Reifen 100 unterschiedlicher Größe mittels der Reifenprüfeinrichtung 10 geprüft werden können. Die Positionierantriebe können Linearantriebe sein. Ferner können die Positionierantriebe elektrische, pneumatische oder hydraulische Antriebe sein. Mittels der Positionierantriebe können vorzugsweise ebenfalls Lichtquellen 20a-20f einer Beleuchtungseinrichtung 18 der Reifenprüfeinrichtung 10 positionierbar sein.

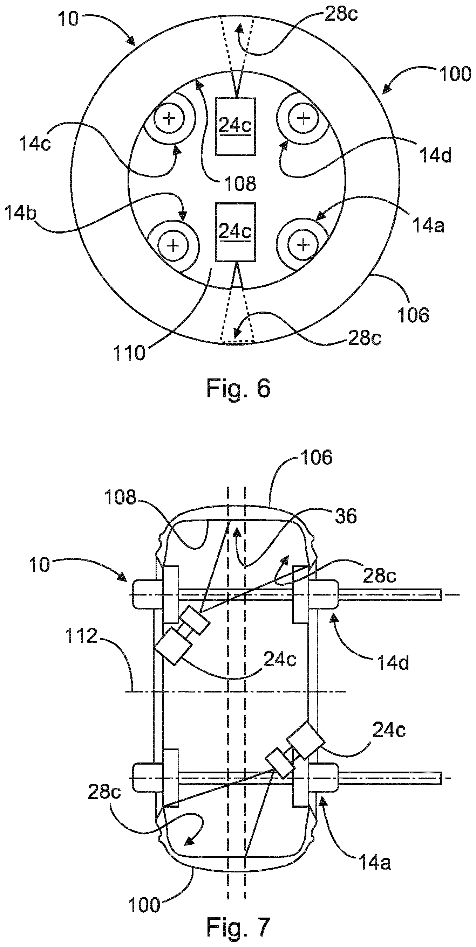

Die Fig. 6 und 7 zeigen eine Reifenprüfeinrichtung 10 mit einer oberen und einer unteren Aufnahmeeinrichtung 24c. Die zwei Aufnahmeeinrichtungen 24c sind derart auf innenliegende Oberflächenbereiche des Reifens 100 ausgerichtet, dass sich der Aufnahmebereich 28c der zwei Aufnahmeeinrichtungen 24c überschneidet. Die Überschneidung erfolgt dabei derart, dass sich ein umlaufender Überlappungsbereich 36 ergibt. Die obere Aufnahmeeinrichtung 24c erzeugt Bildaufnahmen vom rechten Innenbereich des Reifens 100, also vom rechten inneren Wulstbereich, dem Innenbereich der rechten Flanke und einem rechten Abschnitt des umlaufenden Mittelbereichs. Die untere Aufnahmeeinrichtung 24c erzeugt Bildaufnahmen vom linken Innenbereich des Reifens 100, also von dem linken inneren Wulstbereich, dem Innenbereich der linken Flanke und einem linken Abschnitt des umlaufenden Mittelbereichs. Der sich ergebende Überlappungsbereich 36 ist ein umlaufender Streifen.

### Bezugszeichenliste

- 10: Reifenprüfeinrichtung
- 12: Rotationseinrichtung
- 14a-14d: Kontaktglieder
- 16a-16d: Rotationsrichtungen
- 18: Beleuchtungseinrichtung
- 20a-20f: Lichtquellen
- 22a, 22b: Trägereinrichtungen
- 24a-24d: Aufnahmeeinrichtungen
- 26a-26d: Spreizkörper
- 28a-28c: Aufnahmebereiche
- 30: Teleskopmechanik
- 32a, 32d: Hohlwelle
- 34a, 34d: Innenwelle
- 36: Überlappungsbereich

- 100: Reifen
- 102: Reifenwülste
- 104: Rotationsrichtung
- 106: Reifenoberfläche
- 108: Reifenoberfläche
- 110: Felgenausnehmung
- 112: Rotationsachse

## Patentansprüche

1. Reifenprüfeinrichtung (10), mit:
- einer Rotationseinrichtung (12), welche mehrere Kontaktglieder (14a-14d) zum Einspannen eines zu prüfenden Reifens (100) aufweist, wobei die Kontaktglieder (14a-14d) an der Kontur der umlaufenden Reifenwülste (102) des zu prüfenden Reifens (100) positionierbar sind und zumindest ein Kontaktglied (14a-14d) rotierend antreibbar und dazu eingerichtet ist, den zu prüfenden Reifen (100) zu rotieren;
wobei eine oder mehrere sensorische Aufnahmeeinrichtungen (24a-24d), welche dazu eingerichtet sind, Aufnahmen von einer innenliegenden und/oder einer außenliegenden Reifenoberfläche (106, 108) zu erzeugen, **dadurch gekennzeichnet, dass** zumindest ein Kontaktglied (14a-14d) einen Spreizmechanismus aufweist, mittels welchem die Reifenwülste (102) des zu prüfenden Reifens (100) auseinanderspreizbar sind.

2. Reifenprüfeinrichtung (10) nach Anspruch 1,
**dadurch gekennzeichnet, dass** der Spreizmechanismus eine Teleskopmechanik (30) umfasst.

3. Reifenprüfeinrichtung (10) nach Anspruch 1 oder 2,
**dadurch kennzeichnet, dass** der Spreizmechanismus zwei Spreizkörper (26a-26d) umfasst, deren Abstand in Querrichtung des Reifens (100) zum Auseinanderspreizen der Reifenwülste (102) des zu prüfenden Reifens (100) veränderbar ist.

4. Reifenprüfeinrichtung (10) nach einem der vorstehenden Ansprüche,
**dadurch gekennzeichnet, dass** eine, mehrere oder sämtliche sensorische Aufnahmeeinrichtungen (24a-24d) als Kameras ausgebildet sind, welche dazu eingerichtet sind, Bildaufnahmen von der innenliegenden und/oder der außenliegenden Reifenoberfläche (106, 108) zu erzeugen.

5. Reifenprüfeinrichtung (10) nach einem der vorstehenden Ansprüche,
**dadurch gekennzeichnet, dass** eine oder mehrere sensorische Aufnahmeeinrichtungen (24a-24d) zumindest teilweise in der Felgenausnehmung (110) des Reifens (100) positionierbar und auf einen innenliegenden Oberflächenbereich des Reifens (100) ausrichtbar sind.

6. Reifenprüfeinrichtung (10) nach einem der vorstehenden Ansprüche,
**dadurch gekennzeichnet, dass** zwei sensorische Aufnahmeeinrichtungen (24a-24d) derart auf innenliegende Oberflächenbereiche des Reifens (100) ausrichtbar sind, dass sich der Aufnahmebereich (28a-28c) der zwei sensorischen Aufnahmeeinrichtungen (24a-24d) überschneidet.

7. Reifenprüfeinrichtung (10) nach einem der vorstehenden Ansprüche,
**gekennzeichnet durch** eine Beleuchtungseinrichtung (18) mit einer oder mehreren Lichtquellen (20a-20f), welche dazu eingerichtet ist, die innenliegende und/oder die außenliegende Reifenoberfläche (106, 108) zu beleuchten.

8. Verfahren zum Prüfen eines Reifen (100) mittels einer Reifenprüfeinrichtung (10), mittels einer Reifenprüfeinrichtung (10) gemäß einem der vorstehenden Ansprüche, mit den Schritten:
- Einspannen des zu prüfenden Reifens (100) in eine Rotationseinrichtung (12) der Reifenprüfeinrichtung (10) durch Positionieren mehrerer Kontaktglieder (14a-14d) der Rotationseinrichtung (12) an der Kontur der umlaufenden Reifenwülste (102) des zu prüfenden Reifens (100);
- Einspannen des zu prüfenden Reifens (100) in eine Rotationseinrichtung (12) der Reifenprüfeinrichtung (10) durch Positionieren mehrerer Kontaktglieder (14a-14d) der Rotationseinrichtung (12) an der Kontur der umlaufenden Reifenwülste (102) des zu prüfenden Reifens (100); und
- Rotieren des zu prüfenden Reifens (100) durch rotierendes Antreiben zumindest eines Kontaktglieds (14a-14d);
- Erzeugen von Aufnahmen von einer innenliegenden und/oder einer außenliegenden Reifenoberfläche (106, 108) mittels einer oder mehrerer sensorischer Aufnahmeeinrichtungen (24a-24d) der Reifenprüfeinrichtung (10).

9. Verfahren nach Anspruch 8,
**gekennzeichnet durch** zumindest einen der folgenden Schritte:
- Positionieren einer oder mehrerer sensorischer Aufnahmeeinrichtungen (24a-24d) zumindest teilweise in der Felgenausnehmung (110) des zu prüfenden Reifens (100);
- Ausrichten mehrerer sensorischer Aufnahmeeinrichtungen (24a-24d) auf einen innenliegenden Oberflächenbereich des Reifens (100), vorzugsweise derart, dass sich der Aufnahmebereich (28a-28c) von zwei sensorischen Aufnahmeeinrichtungen (24a-24d) überschneidet;
- Beleuchten der innenliegenden und/oder der außenliegenden Reifenoberfläche (106, 108) mittels einer oder mehreren Lichtquellen (20a-20f) einer Beleuchtungseinrichtung (18) der Reifenprüfeinrichtung (10).

## Claims

1. Tyre inspection device (10) having:
- a rotation device (12) which has a plurality of contact members (14a-14d) for clamping a tyre (100) to be inspected, wherein the contact members (14a-14d) are able to be positioned on the contour of the encircling tyre beads (102) of the tyre (100) to be inspected and at least one contact member (14a-14d) is able to be driven in rotation and is designed to rotate the tyre (100) to be inspected;
wherein one or more sensor-type recording devices (24a-24d), which are designed to create recordings of an internal and/or an external tyre surface (106, 108), **characterized in that** at least one contact member (14a-14d) has a spreading mechanism by means of which the tyre beads (102) of the tyre (100) to be inspected are able to be spread apart.

2. Tyre inspection device (10) according to Claim 1,
**characterized in that** the spreading mechanism comprises a telescopic mechanism (30).

3. Tyre inspection device (10) according to Claim 1 or 2,
**characterized in that** the spreading mechanism comprises two spreading bodies (26a-26d), the spacing of which in the transverse direction of the tyre (100) is variable in order to spread apart the tyre beads (102) of the tyre (100) to be inspected.

4. Tyre inspection device (10) according to any of the preceding claims,
**characterized in that** one, a plurality or all of the sensor recording devices (24a-24d) are in the form of cameras which are designed to create image recordings of the internal and/or the external tyre surface (106, 108).

5. Tyre inspection device (10) according to any of the preceding claims, **characterized in that** one or more sensor-type recording devices (24a-24d) are able to be positioned at least partially in the rim recess (110) of the tyre (100) and are able to be oriented towards an internal surface region of the tyre (100).

6. Tyre inspection device (10) according to any of the preceding claims,
**characterized in that** two sensor-type recording devices (24a-24d) are able to be oriented towards internal surface regions of the tyre (100) such that the recording regions (28a-28c) of the two sensor-type recording devices (24a-24d) overlap.

7. Tyre inspection device (10) according to any of the preceding claims,
**characterized by** an illumination device (18) having one or more light sources (20a-20f), which is designed to illuminate the internal and/or external tyre surface (106, 108).

8. Method for inspecting a tyre (100) by means of a tyre inspection device (10), by means of a tyre inspection device (10) according to any of the preceding claims, having the steps of:
- clamping the tyre (100) to be inspected in a rotation device (12) of the tyre inspection device (10) by positioning a plurality of contact members (14a-14d) of the rotation device (12) on the contour of the encircling tyre beads (102) of the tyre (100) to be inspected;
- clamping the tyre (100) to be inspected in a rotation device (12) of the tyre inspection device (10) by positioning a plurality of contact members (14a-14d) of the rotation device (12) on the contour of the encircling tyre beads (102) of the tyre (100) to be inspected; and
- rotating the tyre (100) to be inspected by driving at least one contact member (14a-14d) in rotation;
- creating recordings of an internal and/or an external tyre surface (106, 108) by means of one or more sensor-type recording devices (24a-24d) of the tyre inspection device (10).

9. Method according to Claim 8,
**characterized by** at least one of the following steps:
- positioning one or more sensor-type recording devices (24a-24d) at least partially in the rim recess (110) of the tyre (100) to be inspected;
- orienting a plurality of sensor-type recording devices (24a-24d) towards an internal surface region of the tyre (100), preferably such that the recording regions (28a-28c) of two sensor-type recording devices (24a-24d) overlap;
- illuminating the internal and/or the external tyre surface (106, 108) by means of one or more light sources (20a-20f) of an illumination device (18) of the tyre inspection device (10).

## Revendications

1. Dispositif de contrôle de pneus (10), comprenant :
- un dispositif de rotation (12), lequel possède plusieurs éléments de contact (14a-14d) destinés à serrer un pneu (100) à contrôler, les éléments de contact (14a-14d) pouvant être positionnés au niveau du contour des talons de pneu (102) périphériques du pneu (100) à contrôler et au moins un élément de contact (14a-14d) pouvant être entraîné en rotation et étant conçu pour mettre le pneu (100) à contrôler en rotation ;
un ou plusieurs dispositifs d'enregistrement (24a-24d) sensoriels, lesquels sont conçus pour générer des enregistrements d'une surface de pneu (106, 108) intérieure et/ou extérieure, **caractérisé en ce qu'**au moins un élément de contact (14a-14d) possède un mécanisme d'écartement au moyen duquel les talons de pneu (102) du pneu (100) à contrôler peuvent être écartés l'un de l'autre.

2. Dispositif de contrôle de pneus (10) selon la revendication 1,
**caractérisé en ce que** le mécanisme d'écartement comporte un mécanisme télescopique (30).

3. Dispositif de contrôle de pneus (10) selon la revendication 1 ou 2,
**caractérisé en ce que** le mécanisme d'écartement comporte deux corps d'écartement (26a-26d), dont l'espacement dans la direction transversale du pneu (100) peut être modifié pour l'écartement des talons de pneu (102) du pneu (100) à contrôler.

4. Dispositif de contrôle de pneus (10) selon l'une des revendications précédentes, **caractérisé en ce qu'**un ou plusieurs dispositifs d'enregistrement (24a-24d) sensoriels sont réalisés sous la forme de caméras, lesquelles sont conçues pour générer des prises de vue de la surface de pneu (106, 108) intérieure et/ou extérieure.

5. Dispositif de contrôle de pneus (10) selon l'une des revendications précédentes, **caractérisé en ce qu'**un ou plusieurs dispositifs d'enregistrement (24a-24d) sensoriels peuvent être positionnés au moins partiellement dans le creux de jante (110) du pneu (100) et peuvent être orientés sur une zone de surface intérieure du pneu (100).

6. Dispositif de contrôle de pneus (10) selon l'une des revendications précédentes, **caractérisé en ce que** deux dispositifs d'enregistrement (24a-24d) sensoriels peuvent être orientés sur les zones de surface intérieure du pneu (100) de telle sorte que la zone d'enregistrement (28a-28c) des deux dispositifs d'enregistrement (24a-24d) sensoriels se chevauche.

7. Dispositif de contrôle de pneus (10) selon l'une des revendications précédentes, **caractérisé par** un dispositif d'éclairage (18) comprenant une ou plusieurs sources de lumière (20a-20f), lequel est conçu pour éclairer la surface de pneu (106, 108) intérieure et/ou extérieure.

8. Procédé de contrôle d'un pneu (100) au moyen d'un dispositif de contrôle de pneus (10) au moyen d'un dispositif de contrôle de pneus (10) selon l'une des revendications précédentes, comprenant les étapes suivantes :
- serrage d'un pneu (100) à contrôler dans un dispositif de rotation (12) du dispositif de contrôle de pneus (10) par positionnement de plusieurs éléments de contact (14a-14d) du dispositif de rotation (12) au niveau du contour des talons de pneu (102) périphériques du pneu (100) à contrôler ;
- serrage d'un pneu (100) à contrôler dans un dispositif de rotation (12) du dispositif de contrôle de pneus (10) par positionnement de plusieurs éléments de contact (14a-14d) du dispositif de rotation (12) au niveau du contour des talons de pneu (102) périphériques du pneu (100) à contrôler ; et
- mise en rotation du pneu (100) à contrôler par entraînement rotatif d'au moins un élément de contact (14a-14d) ;
- génération d'enregistrements d'une surface de pneu (106, 108) intérieure et/ou extérieure au moyen d'un ou plusieurs dispositifs d'enregistrement (24a-24d) sensoriels du dispositif de contrôle de pneus (10).

9. Procédé selon la revendication 8,
**caractérisé par** au moins l'une des étapes suivantes :
- positionnement d'un ou plusieurs dispositifs d'enregistrement (24a-24d) sensoriels au moins partiellement dans le creux de jante (110) du pneu (100) à contrôler ;
- orientation de plusieurs dispositifs d'enregistrement (24a-24d) sensoriels sur une zone de surface intérieure du pneu (100), de préférence de telle sorte que la zone d'enregistrement (28a-28c) des deux dispositifs d'enregistrement (24a-24d) sensoriels se chevauche ;
- éclairage de la surface de pneu (106, 108) intérieure et/ou extérieure au moyen d'une ou plusieurs sources de lumière (20a-20f) d'un dispositif d'éclairage (18) du dispositif de contrôle de pneus (10).
